# EUROPÄISCHE PATENTSCHRIFT

(11) **EP 3 656 963 B1**
(45) Veröffentlichungstag und Bekanntmachung des Hinweises auf die Patenterteilung: **14.09.2022**
(21) Anmeldenummer: 19178031.1
(22) Anmeldetag: 04.06.2019
(51) Int. Cl.: E06B 9/266, B23D 23/00

(54) **VORRICHTUNG ZUM KÜRZEN VON LAMELLEN EINER JALOUSIE UND VERFAHREN ZUM KÜRZEN VON LAMELLEN**
DEVICE FOR SHORTENING OF LAMELLAE OF A BLIND AND METHOD FOR SHORTENING OF LAMELLAE
DISPOSITIF DE RACCOURCISSEMENT DES LAMES D'UNE STORE À LAMES ET MÉTHODE DE RACCOURCISSEMENT DES LAMES

(30) Priorität: 20.11.2018 AT 3492018
(43) Veröffentlichungstag der Anmeldung: 27.05.2020
(73) Patentinhaber: Gruber, Manfred, 8855 Wangen (CH)
(72) Erfinder: Gruber, Manfred, 8855 Wangen (CH)
(74) Vertreter: Torggler & Hofmann Patentanwälte - Rankweil

(56) Entgegenhaltungen:
- DE-U1- 9 004 940
- DE-U1- 9 419 590
- US-A- 4 525 907
- US-A- 5 927 172
- US-A- 6 108 891

## Beschreibung

Die Erfindung bezieht sich auf eine Vorrichtung zum Einspannen von Lamellen einer Jalousie für das Kürzen dieser Lamellen bezüglich der Breite der Jalousie.

In der Praxis kommt es immer wieder vor, dass Jalousien in ihrer Breite gekürzt werden sollen, indem die Lamellen der Jalousie gekürzt werden, beispielsweise im Fall von Messfehlern beim Vermessen der Jalousie. Herkömmlicherweise muss dazu die Jalousie auseinandermontiert werden, um dann jede Lamelle entsprechend zu kürzen. Dies ist mit einem erheblichen Aufwand verbunden. Auch kann es beim Kürzen der Lamellen leicht zu Fehlern kommen.

Aus der US 4,525,907 A geht eine Montagehilfe für Jalousien hervor, welche eine Mehrzahl von übereinander gestapelten Klemmplättchen aufweist, die zueinander zentriert sind, wobei zwischen aufeinanderfolgenden Klemmplättchen des Stapels jeweils ein Klemmschlitz zum Einspannen einer der Lamellen der Jalousie vorhanden ist. Nach Verspannen der zwischen die Klemmplättchen eingespannten Lamellen können zuvor auf die Klemmplättchen aufgebrachte Leiterbänder über die Lamellen aufgezogen werden.

DE9419590 U1 offenbart eine Vorrichtung zum Einspannen von Lamellen einer Jalousie für das Kürzen dieser Lamellen bezüglich der Breite der Jalousie.

Aufgabe der Erfindung ist es eine verbesserte Vorrichtung zum Einspannen von Lamellen einer Jalousie bereitzustellen, um diese zu kürzen. Erfindungsgemäß gelingt dies durch eine Vorrichtung mit den Merkmalen des Anspruchs 1.

Eine Vorrichtung gemäß der Erfindung umfasst mehrere Klemmplättchen. Diese sind zu einem Stapel zusammensetzbar. In einem Stapel von zusammengesetzten Klemmplättchen sind aufeinanderfolgende Klemmplättchen durch Zentrierelemente der Klemmplättchen zumindest bezogen auf eine Richtung, die parallel zur Richtung der Längserstreckung der einzuspannenden Lamellen liegt, gegeneinander ausgerichtet. Zwischen aufeinanderfolgenden Klemmplättchen ist jeweils ein Spalt zum Einspannen einer der Lamellen der Jalousie vorhanden.

Durch die erfindungsgemäße Vorrichtung können mehrere der Lamellen der Jalousie gleichzeitig eingespannt werden und in der Folge gekürzt werden. Der Arbeitsaufwand zum Kürzen der Jalousie in ihrer Breite wird dadurch wesentlich verringert und auch die Gefahr von Fehlern beim Kürzen der Lamellen wird eingedämmt. Eine erfindungsgemäße Vorrichtung umfasst vorzugsweise mehr als 10

Klemmplättchen, beispielsweise 16 Klemmplättchen. So können mit einer erfindungsgemäßen Vorrichtung 10 oder mehr Lamellen, beispielsweise 15 Lamellen, gleichzeitig gekürzt werden.

Die Klemmplättchen umfassen vorteilhafterweise ein unteres End-Klemmplättchen, welches an seiner Oberseite eine obere Klemmkontur aufweist, ein oberes End-Klemmplättchen, welches an der Unterseite eine untere Klemmkontur aufweist und mehrere mittlere Klemmplättchen, die an ihren Ober- und Unterseiten obere und untere Klemmkonturen aufweisen, wobei die Klemmschlitze jeweils durch die obere Klemmkontur eines der Klemmplättchen und die untere Klemmkontur des benachbarten darüber liegenden Klemmplättchens ausgebildet werden. Das untere End-Klemmplättchen und das obere End-Klemmplättchen können hierbei in vorteilhafter Weise zum Zusammenwirken mit einer Spannvorrichtung zum Verspannen des Stapels der Klemmplättchen mit den dazwischen eingesetzten Lamellen ausgebildet sein. So kann in einer vorteilhaften Ausführungsform die Oberseite des oberen End-Klemmplättchens flach sein, ebenso wie die Unterseite des unteren End-Klemmplättchens.

Weitere Vorteile und Einzelheiten der Erfindung werden im Folgenden anhand der beiliegenden Zeichnung erläutert. In dieser zeigen:
- Fig. 1: eine Schrägsicht eines Ausführungsbeispiels einer erfindungsgemäßen Vorrichtung, wobei die Klemmplättchen beabstandet übereinander liegend dargestellt sind und der Einfachheit halber nur drei mittlere Klemmplättchen dargestellt sind;
- Fig. 2: eine Seitenansicht eines unteren End-Klemmplättchens, eines mittleren Klemmplättchens und eines oberen End-Klemmplättchens, übereinander liegend im Abstand angeordnet;
- Fig. 3: eine Schrägsicht der Klemmplättchen von Fig. 2, zu einem Stapel zusammengesetzt;
- Fig. 4: einen Randabschnitt einer Lamelle einer Jalousie in einen der Klemmschlitze eingesetzt;
- Fig. 5: eine schematisierte Schnittdarstellung (parallel zur Richtung der Längserstreckung der Lamellen) von vier mit Randabschnitten in Klemmschlitze zwischen den Klemmplättchen der erfindungsgemäßen Vorrichtung eingesetzten Lamellen einer Jalousie, wobei die Klemmplättchen mit den dazwischen liegenden Lamellen mittels einer Klemmvorrichtung verspannt sind und eine Säge zum Schneiden der Lamellen angedeutet ist.

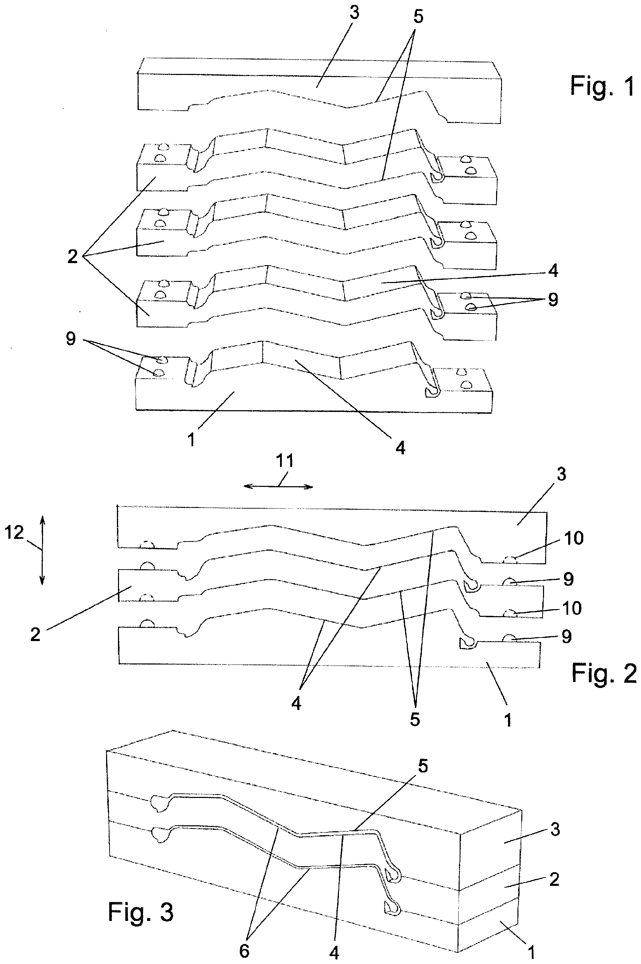

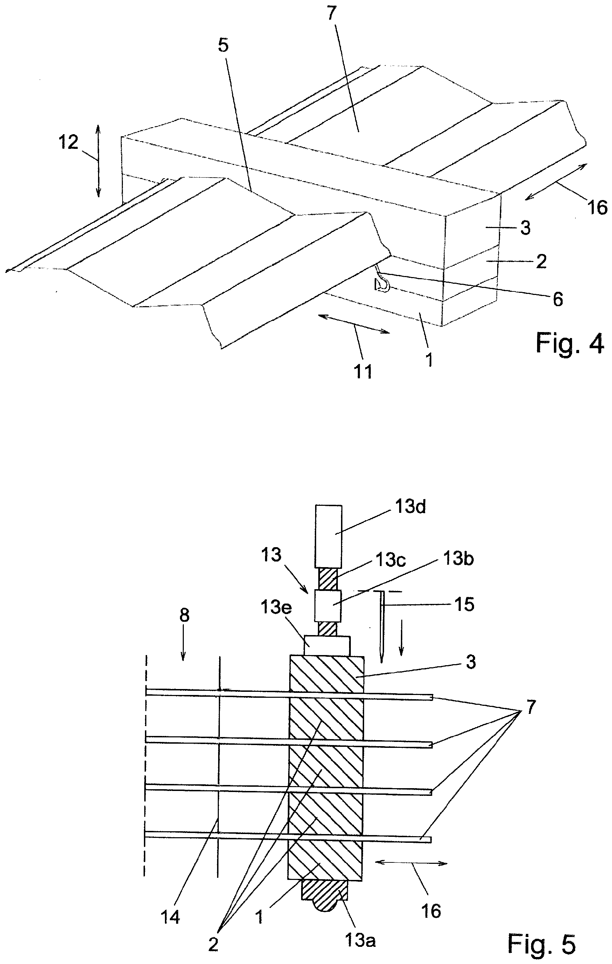

Ein Ausführungsbeispiel einer erfindungsgemäßen Vorrichtung ist in den Fig. 1-5 dargestellt (wobei die Schnittdarstellung von Fig. 5 schematisiert ist). Die Vorrichtung umfasst mehrere Klemmplättchen 1-3. Die Klemmplättchen 1-3 sind zu einem Stapel zusammensetzbar, wie dies in Fig. 3 für drei Klemmplättchen gezeigt ist. Ganz unten im Stapel ist ein unteres End-Klemmplättchen 1 angeordnet. Ganz oben im Stapel ist ein oberes End-Klemmplättchen 3 angeordnet. Dazwischen sind - je nach der Anzahl der zu klemmenden Lamellen - eine Mehrzahl von mittleren Klemmplättchen 2 angeordnet (wobei in Fig. 3 der Einfachheit halber nur eines dieser mittleren Klemmplättchen 2 dargestellt ist).

Die im Stapel benachbarten Klemmplättchen 1-3 weisen an ihren zueinander gerichteten Oberflächen jeweils eine Klemmkontur 4, 5 auf. Die Klemmkonturen 4, 5 bilden zwischen zwei benachbarten Klemmplättchen 1-3 jeweils einen Klemmschlitz 6 zur Aufnahme einer der Lamellen 7 der Jalousie 8 aus. Der Klemmschlitz 6 ist an die Kontur der Lamelle 7 angepasst. Wenn die benachbarten Klemmplättchen 1-3 vollständig aneinander anliegen, ist die Breite des Klemmschlitzes 6 etwas kleiner als die Dicke der Lamelle 7. Wenn die Lamelle 7 in den Klemmschlitz 6 eingelegt wird und die benachbarten Klemmplättchen 1-3, zwischen denen die Lamelle angeordnet ist, zusammengespannt werden, wird die Lamelle 7 somit zwischen den benachbarten Klemmplättchen 1-3 eingeklemmt, d.h. die Lamelle 7 wird zwischen den benachbarten Klemmplättchen 1-3 eingespannt.

Die mittleren Klemmplättchen 2 weisen jeweils eine obere und eine untere Klemmkontur 4, 5 auf. Die oberen Klemmkonturen 4 aller mittleren Klemmplättchen 2 sind gleich ausgebildet, ebenso sind die unteren Klemmkonturen 5 aller mittleren Klemmplättchen 2 gleich ausgebildet. Im Ausführungsbeispiel sind die mittleren Klemmplättchen 2 insgesamt alle gleich ausgebildet, wie dies bevorzugt ist.

Das untere End-Klemmplättchen 1 weist im Ausführungsbeispiel nur eine obere Klemmkontur 4 an seiner Oberseite auf, welche gleich ausgebildet ist wie die obere Klemmkonturen 4 der mittleren Klemmplättchen 2. An der Unterseite ist das untere End-Klemmplättchen eben ausgebildet, wodurch das Verspannen der zu einem Stapel angeordneten Klemmplättchen 1-3 erleichtert wird.

Das obere End-Klemmplättchen 3 weist im Ausführungsbeispiel nur eine untere Klemmkontur 5 an seiner Unterseite auf. Diese ist gleich wie die unteren Klemmkonturen 5 der mittleren Klemmplättchen 2 ausgebildet. An seiner Oberseite ist das obere End-Klemmplättchen 3 eben ausgebildet, wodurch das Verspannen der zu einem Stapel zusammengesetzten Klemmplättchen 1-3 erleichtert wird.

Die zu einem Stapel zusammengesetzten Klemmplättchen 1-3 sind durch Zentrierelemente 9, 10 in ihrer gegenseitigen Lage zueinander ausgerichtet. Im gezeigten Ausführungsbeispiel werden diese Zentrierelemente 9, 10 von noppenartigen Vorsprüngen (Zentrierelemente 9) und korrespondierende Vertiefungen (Zentrierelemente 10) gebildet. Die die Zentrierelemente 10 bildenden Vertiefungen sind nur in Fig. 2 durch gestrichelte Linien angedeutet.

Beispielsweise können die in Form von noppenartigen Erhebungen ausgebildeten Zentrierelemente 9 an den Oberseiten der mittleren Klemmplättchen 2 und an der Oberseite des unteren End-Klemmplättchens 1 angeordnet sein und die in Form von korrespondierenden Vertiefungen ausgebildeten Zentrierelemente 10 können an den Unterseiten der mittleren Klemmplättchen 2 und an der Unterseite des oberen End-Klemmplättchens 3 angeordnet sein.

Durch die Zentrierelemente 9, 10 werden die Klemmplättchen 1-3 beim Stapeln bezogen auf eine Richtung parallel zur Richtung der Längserstreckung 16 der Lamellen 7 (=rechtwinkelig zur Richtung der Längserstreckung 11 der Klemmplättchen 1-3 und rechtwinkelig zur Stapelrichtung 12) sowie bezogen auf eine Richtung parallel zur Richtung der Längserstreckung 11 der Klemmplättchen 1-3 (=rechtwinkelig zur Längserstreckung 16 der Lamellen 7 und rechtwinkelig zur Stapelrichtung 12) zueinander ausgerichtet und eine gegenseitige Verschiebung der Klemmplättchen 1-3 bezogen auf diese Richtungen wird verhindert.

Die zu einem Stapel zusammengesetzten Klemmplättchen 1-3 können mit einer Spannvorrichtung 13 miteinander verspannt werden. Mit der Spannvorrichtung 13 können die Klemmplättchen 1-3 somit bezogen auf die Stapelrichtung 12 miteinander verklemmt werden. Die Spannvorrichtung ist lediglich in Fig. 5 angedeutet. Beispielsweise kann es sich um eine herkömmliche Schraubzwinge handeln. Diese weist einen festen Spannarm 13a und einen auf einer Schiene (nicht dargestellt) beweglichen Spannarm 13b auf, der eine Gewindebohrung aufweist, durch welche sich eine Spindel 13c mit einem Griff 13d und einer Druckplatte 13e erstreckt.

In anderer Weise ausgebildete Spannvorrichtungen können ebenfalls eingesetzt werden.

Um eine Jalousie 8 in ihrer Breite zu kürzen, wird folgendermaßen vorgegangen:
Eine Anzahl von aufeinanderfolgenden Lamellen 7 der Jalousie, beispielsweise 15 Lamellen, werden in die Klemmschlitze 6 eingesetzt. Hierzu können die Klemmplättchen 1-3 nacheinander zusammengesetzt werden, wobei Klemmplättchen 1-3 in einfacher Weise einzeln zwischen aufeinanderfolgende Lamellen 7 der Jalousie 8 eingesetzt werden können. Die Lamellen 7 können hierbei miteinander verbunden bleiben. In Fig. 5 ist schematisch ein die Lamellen 7 verbindendes Band 14 dargestellt.

Die zusammengesetzten Klemmplättchen 1-3 sind hierbei durch die Zentrierelemente 9, 10 zueinander ausgerichtet.

Wenn die gewünschten Lamellen 7 in den Klemmschlitzen 6 angeordnet sind, werden die Klemmplättchen 1-3 durch die Spannvorrichtung 13 miteinander verspannt. Randabschnitte der Lamellen 7 stehen hierbei alle gleich weit auf einer Seite des Stapels der Klemmplättchen 1-3 aus diesem heraus, vgl. Fig. 5.

Die eingespannten Lamellen 7 können in der Folge mit einem Schneidwerkzeug 15 im Bereich ihrer Randabschnitte abgeschnitten und somit gekürzt werden. Beim Schneidwerkzeug 15 kann es sich beispielsweise um eine Kappsäge handeln. Das Kürzen aller eingespannten Lamellen 7 kann in einem einzelnen Schnitt erfolgen. Die Gefahr von Fehlern beim Kürzen der Lamellen 7 wird dadurch wesentlich verringert.

Das Abtrennen der Lamellen 7 im Bereich ihrer Randabschnitte erfolgt hierbei vorteilhafterweise nahe beim Stapel der miteinander verspannten Klemmplättchen 1-3, vorzugsweise in einem Abstand von weniger als 5 mm.

Falls die Jalousie noch weitere zu kürzenden Lamellen 7 aufweist, wird der zuvor beschriebene Vorgang wiederholt, bis alle Lamellen 7 der Jalousie 8 gekürzt sind.

Durch die Erfindung wird ein sehr effizientes Kürzen der Lamellen 7 ermöglicht.

Unterschiedliche Modifikationen des gezeigten Ausführungsbeispiels der Erfindung sind denkbar und möglich, ohne den Bereich der Erfindung zu verlassen.

So sind die Klemmkonturen 4, 5 jeweils an die Ausbildung der Lamellen 7 der Jalousie 8 angepasst.

Unterschiedliche Ausbildungen von Zentrierelementen 9, 10 können eingesetzt werden, beispielsweise auch stiftartige.

Die Zentrierung durch die Zentrierelemente 9, 10 könnte auch nur in eine Richtung erfolgen, welche parallel zur Richtung der Längserstreckung 16 der einzuspannenden Lamellen 7 liegt (=rechtwinkelig zur Richtung der Längserstreckung 11 der Klemmplättchen 1-3 und rechtwinkelig zur Stapelrichtung 12). Durch die Zentrierelemente 9, 10 wird dann also eine gegenseitige Verschiebung der zu einem Stapel zusammengesetzten Klemmplättchen 1-3 in die Richtung parallel zur Richtung der Längserstreckung 11 der Lamellen 7 verhindert. Solche Zentrierelemente könnten beispielsweise in Form von Leisten ausgebildet sein, welche in Nuten eingreifen. Die Ausrichtung der Klemmplättchen 1-3 bezogen auf eine Richtung parallel zur Richtung der Längserstreckung 11 der Klemmplättchen 1-3 könnte dann allein durch die Klemmkonturen 4, 5 in Verbindung mit den in den Klemmschlitzen 6 angeordneten Lamellen 7 erfolgen.

### Legende zu den Hinweisziffern:

- 1: unteres End-Klemmplättchen
- 2: mittleres Klemmplättchen
- 3: oberes End-Klemmplättchen
- 4: obere Klemmkontur
- 5: untere Klemmkontur
- 6: Klemmschlitz
- 7: Lamelle
- 8: Jalousie
- 9: Zentrierelement
- 10: Zentrierelement
- 11: Längserstreckung
- 12: Stapelrichtung
- 13: Spannvorrichtung
- 13a: fester Spannarm
- 13b: beweglicher Spannarm
- 13c: Spindel
- 13d: Griff
- 13e: Druckplatte
- 14: Band
- 15: Schneidwerkzeug
- 16: Längserstreckung

## Patentansprüche

1. Vorrichtung zum Einspannen von Lamellen (7) einer Jalousie (8) für das Kürzen dieser Lamellen (7) bezüglich der Breite der Jalousie, **gekennzeichnet durch** mehrere Klemmplättchen (1-3), die zu einem Stapel zusammensetzbar sind, wobei im Stapel aufeinanderfolgende Klemmplättchen (1-3) durch Zentrierelemente (9, 10) der Klemmplättchen (1-3) zumindest bezogen auf eine Richtung, die parallel zur Richtung (16) der Längserstreckung der einzuspannenden Lamellen (7) liegt, gegeneinander ausgerichtet sind und wobei zwischen aufeinanderfolgenden Klemmplättchen (1-3) des Stapels jeweils ein Klemmschlitz (6) zum Einspannen einer der Lamellen (7) der Jalousie (8) vorhanden ist, wobei als Zentrierelemente (9, 10) zum gegenseitigen Ausrichten von benachbarten Klemmplättchen (1-3) nach oben und/oder unten gerichtete Vorsprünge an zumindest einem der benachbarten Klemmplättchen (1-3) vorhanden sind, die jeweils in eine Vertiefung im anderen der benachbarten Klemmplättchen eingreifen.

2. Vorrichtung nach Anspruch 1, **dadurch gekennzeichnet, dass** die zu einem Stapel zusammengesetzten Klemmplättchen (1-3) mittels einer Spannvorrichtung (13) miteinander verspannbar sind.

3. Vorrichtung nach Anspruch 2, **dadurch gekennzeichnet, dass** die Spannvorrichtung (13) eine Schraubzwinge ist.

4. Vorrichtung nach einem der Ansprüche 1 bis 3, **dadurch gekennzeichnet, dass** die Klemmplättchen (1-3) ein unteres End-Klemmplättchen (1), welches an seiner Oberseite eine obere Klemmkontur (4) aufweist, ein oberes End-Klemmplättchen (3), welches an seiner Unterseite eine untere Klemmkontur (5) aufweist, und mehrere mittlere Klemmplättchen (2) umfassen, die an ihren Ober- und Unterseiten obere und untere Klemmkonturen (4, 5) aufweisen, wobei die Klemmschlitze (6) jeweils durch die obere Klemmkontur (4) eines der Klemmplättchen (1, 2) und die untere Klemmkontur (5) des benachbarten darüber liegenden Klemmplättchens (2, 3) ausgebildet werden.

5. Vorrichtung nach Anspruch 4, **dadurch gekennzeichnet, dass** die Unterseite des unteren End-Klemmplättchens (1) und/oder die Oberseite des oberen End-Klemmplättchens (3) eben ausgebildet ist.

6. Vorrichtung nach Anspruch 4 oder 5, **dadurch gekennzeichnet, dass** die mittleren Klemmplättchen (2) alle gleich ausgebildet sind.

7. Vorrichtung nach einem der Ansprüche 1 bis 6, **dadurch gekennzeichnet, dass** die von den Vorsprüngen gebildeten Zentrierelemente (9) noppen- oder zapfenartig ausgebildet sind.

8. Vorrichtung nach einem der Ansprüche 1 bis 7, **dadurch gekennzeichnet, dass** die Vorrichtung mehr als 10 Klemmplättchen (1-3) aufweist.

9. Verfahren zum Kürzen von Lamellen (7) einer Jalousie (8) mittels einer Vorrichtung nach einem der Ansprüche 1 bis 8, **dadurch gekennzeichnet, dass** zumindest mehrere aufeinanderfolgende Lamellen (7) der Jalousie (8) in die Klemmschlitze (6) zwischen jeweils zwei benachbarte Klemmplättchen (1-3) eingesetzt werden, wobei der Stapel von Klemmplättchen (1-3) ausgebildet wird, aus welchem auf einer Seite zu kürzende Randabschnitte der Lamellen (7) herausstehen, dass die Klemmplättchen (1-3) mit einer Spannvorrichtung (13) mit den dazwischenliegenden Lamellen (7) miteinander verspannt werden und dass aus den Klemmschlitzen (6) herausstehenden Randabschnitte der Lamellen (7) mit einem Schneidwerkzeug (15) gekürzt werden.

## Claims

1. Device for clamping slats (7) of a blind (8) in order to shorten these slats (7) with regard to the width of the blind, **characterized by** a plurality of clamping plates (1-3) which can be assembled to form a stack, wherein clamping plates (1-3) that succeed one another in the stack are aligned with one another by means of centring elements (9, 10) of the clamping plates (1-3) at least with regard to a direction parallel to the direction (16) of the longitudinal extension of the slats (7) to be clamped, and wherein between successive clamping plates (1-3) of the stack there is in each case a clamping slot (6) for clamping one of the slats (7) of the blind (8), wherein upwardly and/or downwardly directed protrusions on at least one of the adjacent clamping plates (1-3) are provided as centring elements (9, 10) for aligning adjacent clamping plates (1-3) relative to one another, each of said protrusions engaging in a depression in the other of the adjacent clamping plates.

2. Device according to claim 1, **characterized in that** the clamping plates (1-3) assembled to form a stack can be clamped to one another by means of a clamping device (13).

3. Device according to claim 2, **characterized in that** the clamping device (13) is a C-clamp.

4. Device according to any one of claims 1 to 3, **characterized in that** the clamping plates (1-3) comprise a lower end clamping plate (1), which has an upper clamping contour (4) on the upper side thereof, an upper end clamping plate (3), which has a lower clamping contour (5) on the lower side thereof, and a plurality of middle clamping plates (2), which have upper and lower clamping contours (4, 5) on the upper and lower sides thereof, wherein the clamping slots (6) are formed in each case by the upper clamping contour (4) of one of the clamping plates (1, 2) and the lower clamping contour (5) of the adjacent clamping plate (2, 3) located thereabove.

5. Device according to claim 4, **characterized in that** the lower side of the lower end clamping plate (1) and/or the upper side of the upper end clamping plate (3) is flat.

6. Device according to claim 4 or 5, **characterized in that** the middle clamping plates (2) are all identical.

7. Device according to any one of claims 1 to 6, **characterized in that** the centring elements (9) formed by the protrusions are designed as nubs or studs.

8. Device according to any one of claims 1 to 7, **characterized in that** the device comprises more than 10 clamping plates (1-3).

9. Method for shortening slats (7) of a blind (8) by means of a device according to any one of claims 1 to 8, **characterized in that** at least a plurality of successive slats (7) of the blind (8) are inserted into the clamping slots (6) between in each case two adjacent clamping plates (1-3), wherein the stack of clamping plates (1-3) is formed, from which edge portions of the slats (7) to be shortened project on one side, **in that** the clamping plates (1-3) are clamped to one another, with the slats (7) located therebetween, by a clamping device (13), and **in that** edge portions of the slats (7) projecting out of the clamping slots (6) are shortened by means of a cutting tool (15).

## Revendications

1. Dispositif pour serrer des lamelles (7) d'un store vénitien (8) pour raccourcir ces lamelles (7) du point de vue de la largeur du store vénitien, **caractérisé par** plusieurs plaquettes de serrage (1-3) qui peuvent être assemblées en une pile, des plaquettes de serrage (1-3) successives dans la pile étant alignées les unes par rapport aux autres par des éléments de centrage (9, 10) des plaquettes de serrage (1-3) au moins par rapport à une direction parallèle à la direction (16) de l'extension longitudinale des lamelles (7) à serrer, et une fente de serrage (6) étant présente à chaque fois entre des plaquettes de serrage (1-3) successives de la pile pour serrer l'une des lamelles (7) du store vénitien (8), des protubérances orientées vers le haut et/ou vers le bas étant présentes sur au moins l'une des plaquettes de serrage (1-3) successives en tant qu'éléments de centrage (9, 10) pour l'alignement mutuel de plaquettes de serrage (1-3) adjacentes, lesquelles protubérances s'engageant chacune dans un renfoncement dans l'autre des plaquettes de serrage adjacentes.

2. Dispositif selon la revendication 1, **caractérisé en ce que** les plaquettes de serrage (1-3) assemblées en une pile peuvent être serrées les unes contre les autres au moyen d'un dispositif de serrage (13).

3. Dispositif selon la revendication 2, **caractérisé en ce que** le dispositif de serrage (13) est un serre-joint.

4. Dispositif selon l'une des revendications 1 à 3, **caractérisé en ce que** les plaquettes de serrage (1-3) comprennent une plaquette de serrage d'extrémité inférieure (1) présentant un contour de serrage supérieur (4) sur sa face supérieure, une plaquette de serrage d'extrémité supérieure (3) présentant un contour de serrage inférieur (5) sur sa face inférieure, et plusieurs plaquettes de serrage centrales (2) présentant sur leurs faces supérieure et inférieure des contours de serrage supérieurs et inférieurs (4, 5), les fentes de serrage (6) étant formées respectivement par le contour de serrage supérieur (4) de l'une des plaquettes de serrage (1, 2) et par le contour de serrage inférieur (5) de la plaquette de serrage (2, 3) adjacente située au-dessus.

5. Dispositif selon la revendication 4, **caractérisé en ce que** la face inférieure de la plaquette de serrage d'extrémité inférieure (1) et/ou la face supérieure de la plaquette de serrage d'extrémité supérieure (3) sont planes.

6. Dispositif selon la revendication 4 ou 5, **caractérisé en ce que** les plaquettes de serrage centrales (2) sont toutes identiques.

7. Dispositif selon l'une des revendications 1 à 6, **caractérisé en ce que** les éléments de centrage (9) formés par les protubérances sont en forme de picots ou de tenons.

8. Dispositif selon l'une des revendications 1 à 7, **caractérisé en ce que** le dispositif comporte plus de 10 plaquettes de serrage (1-3).

9. Procédé pour raccourcir des lamelles (7) d'un store vénitien (8) au moyen d'un dispositif selon l'une des revendications 1 à 8, **caractérisé en ce qu'**au moins plusieurs lamelles (7) successives du store vénitien (8) sont insérées dans les fentes de serrage (6) entre respectivement deux plaquettes de serrage (1-3) adjacentes, ce qui forme la pile de plaquettes de serrage (1-3) de laquelle dépassent d'un côté des sections de bord des lamelles (7) à raccourcir, **en ce que** les plaquettes de serrage (1-3) sont serrées ensemble au moyen d'un dispositif de serrage (13) avec les lamelles (7) situées entre elles, et **en ce que** des sections de bord des lamelles (7) dépassant des fentes de serrage (6) sont raccourcies au moyen d'un outil de coupe (15).
